# FASCICULE DE BREVET EUROPEEN

(11) **EP 3 459 878 B1**
(45) Date de publication et mention de la délivrance du brevet: **03.03.2021**
(21) Numéro de dépôt: 18195904.0
(22) Date de dépôt: 21.09.2018
(51) Int. Cl.: B65F 1/06, G06Q 10/06, G06Q 10/08, G06Q 50/26

(54) **SYSTÈME ET PROCÉDÉ DE SUIVI DE REMPLISSAGE D'UN ENSEMBLE DE RÉCIPIENTS À ORDURES**
SYSTEM UND VERFAHREN ZUR NACHVERFOLGUNG DER FÜLLUNG EINER EINHEIT VON ABFALLBEHÄLTERN
SYSTEM AND METHOD FOR TRACKING FILLING OF A SET OF WASTE CONTAINERS

(30) Priorité: 21.09.2017 FR 1771002
(43) Date de publication de la demande: 27.03.2019
(73) Titulaire: Nicollin Holding, 69100 Saint Fons (FR); Appulz, 73800 Coise-Saint-Jean-Pied-Gauthier (FR)
(72) Inventeur: DUNAND, Jean-Pierre, 73190 La Thuile (FR); NICOLLIN, Olivier, 34590 Marsillargues (FR)
(74) Mandataire: Rhein, Alain

(56) Documents cités:
- EP-A1- 0 626 569
- EP-A1- 1 482 285
- WO-A1-2017/074521
- FR-A1- 2 902 876
- Ferran Adelantado ET AL: "Understanding the Limits of LoRaWAN", IEEE Communications Magazine, 13 février 2017 (2017-02-13), pages 34-40, XP055534686, DOI: 10.1109/MCOM.2017.1600613 Extrait de l'Internet: URL:https://arxiv.org/pdf/1607.08011.pdf [extrait le 2018-12-14]
- Joseph Finnegan ET AL: "A Comparative Survey of LPWA Networking", , 12 février 2018 (2018-02-12), XP055534593, Extrait de l'Internet: URL:https://arxiv.org/pdf/1802.04222.pdf [extrait le 2018-12-14]

## Description

La présente invention entre dans le domaine de la collecte d'ordures et plus particulièrement de la collecte d'ordures dans un site à haute densité de passage, c'est-à-dire, un site défini dans lequel peut par exemple passer plus de 50 000 personnes par jour.

Un site à haute densité de passage peut être constitué par une gare ferroviaire, un aéroport, une gare routière, un centre d'affaire, un centre commercial, des locaux d'exposition ou de spectacle, une enceinte sportive, un zoo, un parc d'attraction etc.

De manière générale, un site à haute densité de passage est constitué de plusieurs espaces de différentes tailles tels qu'un hall, les espaces étant reliés entre eux par des couloirs ou passages qui peuvent également présenter des tailles différentes.

Dans un tel site, la collecte et le ramassage des ordures constituent un enjeu majeur pour maintenir des bonnes conditions d'hygiène et de propreté. Ainsi, un ensemble de récipients à ordures est réparti plus ou moins uniformément dans les différents espaces et couloirs de manière à fournir aux usagers du site un grand nombre de possibilités pour déposer leurs ordures dans un récipient à ordures.

L'objectif pour le service d'entretien est d'éviter qu'un récipient à ordures ne reste plein trop longtemps. En effet, lorsqu'un récipient à ordures est plein, les usagers peuvent être tentés de jeter leurs ordures par terre ce qui peut rapidement dégrader la propreté d'un site. Outre l'image négative que cela peut engendrer auprès des usagers du site, cela peut également générer des surcoûts importants en matière nettoyage et d'entretien du site.

Dans ce contexte, afin de faciliter le ramassage des ordures chaque récipient à ordures peut être équipé d'un contenant amovible tel qu'un sac de collecte. Toutefois, la difficulté majeure pour gérer un tel ensemble de récipients à ordures réside dans la fréquence de vidage ou de ramassage de chaque récipient à ordures.

En effet, la vitesse de remplissage d'un récipient à ordures est totalement aléatoire et dépend de plusieurs facteurs tels que le positionnement d'un récipient, la fréquence, la densité de passage des usagers et leur propension ou non à avoir des ordures à jeter.

Afin de répondre à cette problématique, classiquement, les services d'entretien envoient des opérateurs en patrouille qui ont pour mission de réaliser des tournées dans les différents espaces et couloirs du site et de vider chaque récipient à ordures lorsqu'ils sont pleins.

Toutefois, les aléas précédemment décrits de la vitesse de remplissage d'un récipient à ordures font qu'il n'est pas rare qu'un récipient à ordures reste plein de longues minutes en fonction de l'avancement de la tournée de l'opérateur générant ainsi des ordures aux environs du récipient à ordures plein.

Le document WO 2014/063184 propose une solution au travers d'un système de suivi de remplissage d'un ensemble de récipients à ordures comportant un boîtier de suivi qui équipe chaque récipient à ordures. Chaque boîtier de suivi comprenant une source d'énergie qui alimente, d'une première part, au moins un capteur de remplissage du récipient à ordures qui est de préférence un capteur à ultrasons, d'une deuxième part, un processeur qui est adapté à calculer le niveau de remplissage du récipient à ordures à deux ou trois niveaux : vide, plein et/ou à moitié plein, d'une troisième part, une mémoire qui stocke le niveau de remplissage du récipient à ordures jusqu'à ce qu'il soit plein, et d'autre part, un émetteur adapté à transmettre des données vers un terminal de traitement distant. Ici, l'émetteur est un émetteur qui utilise un réseau de télécommunication tel qu'un réseau « GPRS » ou « Wifi ». L'émetteur ne transmet d'information au terminal distant que lorsque le récipient à ordures est détecté comme plein.

Ainsi, un tel boîtier de suivi présente de par sa conception de grands besoins énergétiques. En effet, le processeur et la mémoire doivent être alimentés continuellement en énergie, alors que les émetteurs de type « GPRS » et « WIFI » sont très énergivores. Dès lors, pour alimenter un boitier de suivi il est ainsi nécessaire de le brancher sur une prise secteur et/ou de l'équiper d'une batterie de grande capacité, qu'il est nécessaire de changer régulièrement.

Or, le branchement sur secteur du boitier de suivi ou l'utilisation de batterie de grande capacité susceptible de nécessiter une fréquence de remplacement importante, sont trop contraignants et non adaptés dans le cadre d'un système de suivi de remplissage d'un ensemble de récipients à ordures disposés dans un site à haute densité de passage

Le document EP 1 482 285 A1 divulgue un système de suivi selon le préambule de la revendication 1.

Au regard de ces problématiques, la présente invention s'inscrit dans une démarche éco-responsable en proposant une solution alternative permettant de suivre de manière optimale le niveau de remplissage d'un ensemble de récipients à ordures. Dans cet optique, la demanderesse a notamment développé un système de suivi de remplissage comportant un boitier de suivi discret et peu énergivore qui constitue la base de la remontée d'information.

A cet effet, un premier aspect de la présente invention concerne un système de suivi de remplissage d'un ensemble de récipients à ordures selon la revendication 1.

Avantageusement, l'introduction de l'unité relai dans l'architecture du système permet de réduire au strict minimum les opérations de traitement des données qui sont exécutées au niveau du boitier de suivi. La réduction des tâches du boitier de suivi permet de diminuer ses dimensions, de le rendre invisible tout en augmentant l'autonomie de sa source d'énergie. Selon un premier mode de réalisation du premier aspect de l'invention, l'émetteur est un émetteur de radiofréquences paramétré pour fonctionner selon un facteur d'étalement de faible valeur qui est compris entre 50 chips/symbol et 200 chips/symbol.

De préférence, l'émetteur est réglé sur une bande de fréquence d'émission peu encombrée. Dans cette configuration, l'unité relai comporte un récepteur de radiofréquence permettant de recevoir les données transmises par chaque émetteur.

Selon un mode de réalisation du premier aspect de l'invention, l'unité de relai comporte un module de télécommunication adapté à transférer les données transmises par chaque émetteur, au travers d'un réseau de télécommunication, à destination du terminal de traitement distant.

Le système de suivi comporte au moins un terminal mobile adapté à recevoir en temps réel le taux de remplissage de chaque récipient à ordures équipé d'un boîtier de suivi autonome permettant à au moins un opérateur en patrouille sur un site et qui est équipé d'un terminal mobile de recevoir en temps réel des informations quant au taux de remplissage des récipients à ordures du site.

Selon un mode de réalisation du premier aspect de l'invention, chaque boîtier de suivi autonome comporte des moyens de gestion de la source d'énergie qui sont configurés pour éveiller périodiquement le capteur de remplissage et l'émetteur de manière à mesurer le remplissage du récipient à ordures et d'émettre ces données. Avantageusement, la gestion de l'éveil périodique du capteur de remplissage et de l'émetteur permet de réduire la consommation d'énergie et ainsi d'augmenter l'autonomie du boitier de suivi.

Dans ce contexte, le système de suivi comporte un intervalle de sommeil entre chaque période d'éveil qui est compris entre 2 minutes et 15 minutes, de préférence l'intervalle de sommeil est compris entre 5 et 10 minutes.

Selon un mode de réalisation du premier aspect de l'invention, l'émetteur est un émetteur de courtes distances, de préférence, il permet d'émettre sur une distance comprise entre 50 m et 500 m.

Un deuxième aspect de l'invention concerne un procédé de suivi mettant en œuvre le système de suivi du premier aspect de l'invention.

Le procédé de suivi comporte :
une étape de génération d'un message hertzien MZ qui comprend des données du taux de remplissage d'un récipient à ordures correspondant à un boitier de suivi et une signature SN d'identification du boitier de suivi ;
une étape de transmission du message hertzien MZ par l'émetteur vers une unité relai ;
une étape de relai des données transmises par l'émetteur, l'unité relai réceptionne chaque message hertzien MZ et le transforme en message numérique MN, avant de le transmettre le message numérique MN vers le terminal de traitement distant via son module de communication ;
une étape de traitement de chaque message numérique MN par le terminal distant, l'étape de traitement consiste à identifier la provenance du message numérique MN au travers de la signature SN qu'il comporte, à implémenter une base de données relative au taux de remplissage du récipient à ordures identifié ; et
une étape d'alerte est déclenchée lorsque un récipient à ordure atteint un taux de remplissage seuil prédéfini, l'étape d'alerte consistant à alerter un opérateur en tournée sur site que le récipient à ordures correspondant au boîtier de suivi identifié a atteint la valeur seuil prédéfinie de remplissage.

Un tel procédé de suivi présente l' avantage de permettre de suivre en temps réel le taux de remplissage d'un ensemble de récipients à ordures d'un site à haute densité de passage. Ce système de suivi permet d'adapter la tournée de vidage des récipients à ordures en temps réel de par l'étape d'alerte et ainsi de conserver propre un site à haute densité de passage. Parallèlement, les différentes étapes du procédé sont conçues de manière à ce que le boitier de suivi consomme un minimum d'énergie.

Selon une première particularité du deuxième aspect de l'invention, chaque boitier de suivi autonome observe un intervalle de sommeil entre deux périodes d'éveil, lors d'une période d'éveil, le capteur du remplissage et l'émetteur de chaque boitier de suivi s'activent simultanément de manière à générer et transmettre un message hertzien MZ vers l'unité de relai.

De préférence, l'intervalle de sommeil est compris entre 2 minutes et 15 minutes, de préférence l'intervalle de sommeil est compris entre 5 et 10 minutes.

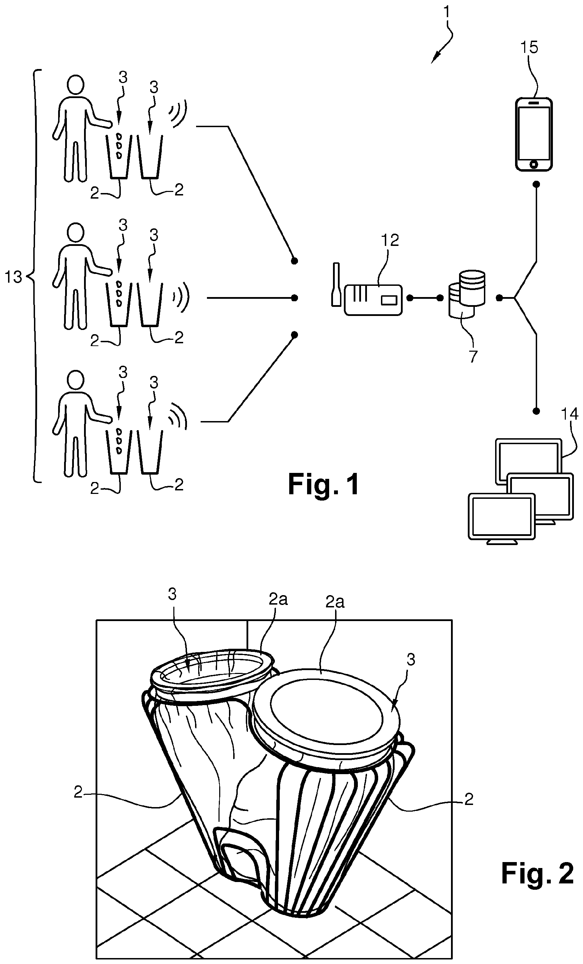

Selon une deuxième particularité du deuxième aspect de l'invention, le message hertzien MZ peut également comprendre des données relatives au niveau restant de la source d'énergie. D'autres particularités et avantages apparaitront dans la description détaillée qui suit d'un exemple, non limitatif, de réalisation de l'invention qui est illustré par les figures 1 à 4 placées en annexe et dans lesquelles :
- la figure 1 est une représentation schématique d'un système de suivi de remplissage d'un ensemble de récipients à ordures conforme à un exemple de réalisation de l'invention ;
- la figure 2 est une représentation de récipients à ordure équipés d'un boitier de suivi conforme à un exemple de réalisation de l'invention ;
- la figure 3 est une représentation schématique d'un boitier de suivi conforme à un exemple de réalisation de l'invention ; et
- la figure 4 est un graphique représentant la durée de vie d'une batterie en fonction d'une fréquence de mesure du boitier de suivi de la figure 3.

La présente invention concerne un système de suivi 1 de remplissage d'un ensemble de récipients à ordures 2 qui sont répartis dans un site à haute densité de passage. Classiquement, un récipient à ordures 2 peut être formé par une poubelle.

Dans l'exemple illustré à la figure 1, afin de suivre le niveau de remplissage d'un nombre déterminé de récipients à ordures 2 qui forment un ensemble de récipients à ordures 2, chaque récipient à ordures 2 comporte un boîtier de suivi 3 autonome.

Comme illustré à la figure 2, chaque récipient à ordures 2 est équipé d'un boîtier de suivi 3 et de préférence comporte un obturateur 2a fermant supérieurement et au moins partiellement le récipient à ordures 2. Dans cet exemple, l'obturateur 2a peut être formé par un couvercle intégral ou partiel qui peut être mobile entre une position ouverte et une position fermée. De préférence, le boîtier de suivi 3 est positionné de manière à être dissimulé par l'obturateur 2a.

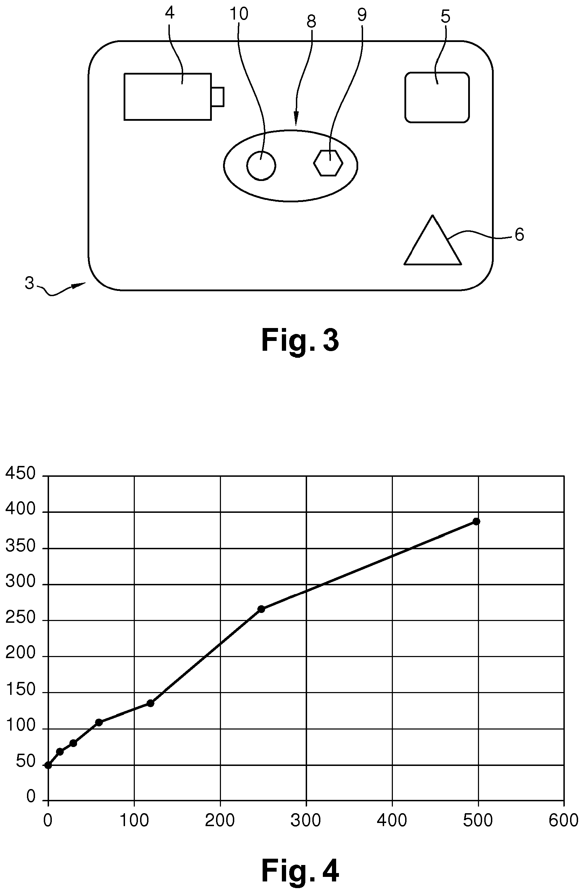

Comme illustré à la figure 3, chaque boîtier de suivi 3 autonome comprend une source d'énergie 4 telle qu'une batterie qui peut être prévue rechargeable. Dans cet exemple, la source d'énergie 3 alimente au moins un capteur de remplissage 5 du récipient à ordures 2.

De préférence, le capteur de remplissage 5 est un capteur de distance de type « temps de vol ». Plus particulièrement, le capteur de remplissage 5 peut être formé par un capteur optique tel qu'un capteur laser. De préférence le capteur de remplissage 5 est orienté vers un fond du récipient à ordures 2.

Dans l'exemple de la figure 3, une source d'énergie 3 alimente au moins un émetteur 6 adapté à transmettre des données vers un terminal de traitement 7 distant. Dans cet exemple, l'émetteur 6 est un émetteur de radiofréquences. Dans cet exemple, l'émetteur 6 transmet des données sous forme d'un message hertzien MZ.

De préférence, l'émetteur 6 est réglé sur une bande de fréquence d'émission qui est d'ordinaire peu utilisée. Avantageusement, une plage de fréquence peu utilisée permet de diminuer la puissance d'émission et fournit un débit de transmission des données plus rapide permettant de réduire la consommation d'énergie de l'émetteur 6. En fonction, de l'Etat dans lequel est exploitée l'invention, des normes de cet Etat et de l'encombrement des plages de fréquence dans cet Etat, la bande de fréquence d'émission peut varier.

En France, l'émetteur 6 peut utiliser des ultra-hautes fréquences qui se propagent en vue directe. Ainsi, la bande de fréquence d'émission peut être réglée à 868 Mhz qui est une bande de fréquence peu utilisée. Or émettre dans une bande de fréquence trop utilisée et/ou chargée telle que la bande de fréquence 433 Mhz impliquerait d'augmenter la puissance d'émission et donc d'augmenter la consommation en énergie de l'émetteur 6.

Comme illustré à la figure 3, chaque boîtier de suivi 3 autonome comporte des moyens de gestion 8 de la source d'énergie 4. En pratique, les moyens de gestion 8 sont configurés pour éveiller périodiquement le capteur de remplissage 5 de manière à mesurer périodiquement le remplissage du récipient à ordures 2.

De préférence, les moyens de gestion 8 éveillent périodiquement l'émetteur 6 qui transmet les données de remplissage immédiatement après qu'elles aient été mesurées par le capteur de remplissage 5.

Avantageusement, cet éveil périodique du capteur de remplissage 5 et de l'émetteur 6 de chaque boitier de suivi 3 permet de réduire la consommation énergétique, de préserver la source d'énergie 4 et de prolonger l'autonomie du boitier de suivi 3 autonome.

En pratique, les moyens de gestion 8 peuvent être formés par un programme algorithmique stocké et exécuté par un microcontrôleur 9 équipant le boitier de suivi 3. Ici, le microcontrôleur 9 est formé par un processeur et une mémoire.

Les moyens de gestion 8 sont paramétrables et coopèrent avec une unité temporelle 10 qui équipe le boîtier de suivi 3 de manière à contrôler les intervalles de sommeil et les périodes d'éveil du microcontrôleur 9, du capteur de remplissage 5 et de l'émetteur 6.

L'unité temporelle 10, est un dispositif alimenté par la source d'énergie 4 qui a pour fonction de battre et/ou de compter une mesure temporelle définie telle qu'une seconde. Ici, l'unité temporelle 10 peut être formée par une horloge ou un compteur de temps. Il est à noter qu'un compteur de temps s'avère moins énergivore qu'une horloge.

Lors de chaque intervalle de sommeil, le capteur de remplissage 5 bascule dans un mode veille à économie d'énergie. En effet, une extinction complète du capteur de remplissage 5 impliquerait une réinitialisation à chaque redémarrage. Or, la réinitialisation du capteur de remplissage 5 est plus énergivore que le maintien du capteur de remplissage 5 en mode veille. Avantageusement, seule l'unité temporelle 10 qui est peu énergivore fonctionne de manière permanente.

Dans ce contexte, le système de suivi 1 comporte un intervalle de sommeil entre chaque période d'éveil du microcontrôleur 9 et/ou du capteur de remplissage 5 et/ou de l'émetteur 6. Dans cet exemple, l'intervalle de sommeil correspond à une période de non fonctionnement du microcontrôleur 9 et/ou du capteur de remplissage 5 et/ou de l'émetteur 6. Chaque intervalle de sommeil est intercalé entre deux périodes d'éveil du microcontrôleur 9 et/ou du capteur de remplissage 5 et/ou de l'émetteur 6 au cours desquelles une mesure du remplissage du récipient à ordures 2 est effectuée et transmise vers le terminal de traitement 7 distant.

De plus, la figure 4 illustre l'allongement de l'autonomie d'une source d'énergie 4 telle qu'une batterie lorsque la durée d'un intervalle de sommeil est augmentée. En effet, la figure 4 représente une courbe de longévité d'une source d'énergie 4 en ordonnée qui est exprimée en heure en fonction d'un intervalle de sommeil en abscisse qui est exprimé en milliseconde ou ms.

Dans ce contexte, l'intervalle de sommeil peut être compris entre 2 minutes et 15 minutes et de préférence l'intervalle de sommeil est compris entre 5 et 10 minutes. Par exemple, en utilisant une batterie de 5000 mA, un tel intervalle de sommeil se traduit par une autonomie de plus de 8000 heures de fonctionnement effectif à savoir environ 12 mois d'autonomie.

Les moyens de gestion 8 permettent de moduler d'autres paramètres de transmission radio de manière à réduire la consommation énergétique de l'émetteur 6.

En effet, le facteur d'étalement du spectre, la puissance d'émission et le débit d'émission sont les principaux autres paramètres qui influencent sur la consommation énergétique de l'émetteur 6.

Dans cet exemple, afin de diminuer la consommation énergétique de l'émetteur 6, les moyens de gestion 8 permettent de paramétrer le facteur d'étalement du spectre à une valeur faible. De préférence, l'émetteur 6 présente un facteur d'étalement est compris entre 50 chips/symbol et 200 chips/symbol, de préférence le facteur d'étalement est compris entre 100 chips/symbol et 150 chips/symbol et de préférence le facteur d'étalement est compris entre 125 chips/symbol et 135 chips/symbol.

En effet, un facteur d'étalement faible permet obtenir un débit de transmission rapide qui peut être compris entre 1 kB/s et 5 kB/s, de préférence le débit de transmission peut être compris entre 1,5 kB/s et 3 kB/s, et de préférence le débit de transmission peut être compris entre 2 kB/s et 2,5 kB/s.

Un débit de transmission rapide permet de réduire le temps de transmission de l'émetteur 6, de fait la consommation énergique de l'émetteur 6 s'en trouve réduite.

Parallèlement, la puissance d'émission de l'émetteur 6 peut être paramétrée par les moyens de gestion 8 à faible valeur. De préférence, la puissance d'émission est comprise entre 5 dBm et 20 dBm, de préférence la puissance d'émission est comprise entre 10 dBm et 15 dBm et de préférence la puissance d'émission est de 13 dBm.

Ainsi, l'optimisation des paramètres de transmission tel que décrite permet de réduire la consommation énergétique de l'émetteur 6 tout en définissant un rayon d'émission de courte distance qui est efficace dans le cadre d'une bande de fréquence peu encombrée. De préférence, le rayon d'émission de l'émetteur est compris entre 50 m et 500 m, de préférence le rayon d'émission est compris entre 100 m et 200 m.

Comme illustré à la figure 1, le système de suivi 1 comporte au moins une unité relai 12 qui est positionnée dans le rayon d'émission de l'émetteur 6 de boîtiers de suivi 3 d'un sous-ensemble de récipients à ordures 2 délimitant un champ de réception de l'unité relai 12 et constituant une flotte 13 de récipients à ordures 2.

En fonction des dimensions du site sur lequel est installé le système de suivi 1 et du nombre de boîtiers de suivi 3 installés pour suivre l'ensemble des récipients à ordures 2 dudit site, le système de suivi 1 peut comporter plusieurs unités relais 12, chaque unité relai 12 étant liée à une flotte 13 de récipients à ordures 2 qui se situent dans son champ de réception.

L' unité relai 12 est adaptée à relayer chaque message hertzien MZ émis par chaque émetteur 6 de la flotte 13 qui se trouve dans son champ de réception. L'unité relai 12 relaye les données vers le terminal de traitement 7 distant.

A cet effet, chaque unité relai 12 comporte un récepteur de radiofréquence permettant de recevoir les messages hertziens MH et un algorithme classique exécuté par un processeur qui permet de transformer chaque message hertzien MZ en un message numérique MN.

Afin de transmettre chaque message numérique MN généré, l'unité de relai 12 comporte un module de télécommunication adapté à transférer des messages numériques MN au travers d'un réseau de télécommunication tel qu'un réseau GSM ou internet ou encore un réseau WIFI.

De manière classique, le module de télécommunication peut être formé par une carte SIM, un modem, une carte réseau etc.

Le terminal de traitement 7 distant est adapté à réceptionner et traiter le massage numérique MN relayé par l'unité relai 12. Dans cet exemple, le terminal de traitement 7 distant implémente une base de données.

Comme illustré à la figure 1, le système de suivi 1 comporte une interface de suivi 14 qui permet de suivre l'évolution du remplissage et le vidage de chaque récipient à ordures 2. Selon une possibilité de l'invention, l'interface de suivi 14 peut permettre de paramétrer à distance les moyens de gestion 8 de chaque boitier de suivi 3 constituant la flotte 13 de chaque unité relai 12.

Avantageusement, l'interface de suivi 14 est accessible via un terminal informatique adapté à communiquer avec le terminal de traitement 7 distant au travers d'un réseau de télécommunication de type internet, GSM etc.

De plus comme illustré à la figure 1, le système de suivi 1 comporte au moins un terminal mobile 15 adapté à recevoir en temps réel le taux de remplissage de chaque récipient à ordures 2 équipé d'un boitier de suivi 3 autonome. En pratique, au moins un opérateur en patrouille sur site est équipé d'un terminal mobile 15 qui lui permet de recevoir en temps réel des informations quant au taux de remplissage des récipients à ordures 2 d'une ou plusieurs flotte(s) 13. Ces informations permettent à chaque opérateur d'optimiser sa tournée de vidage des récipients à ordures 2.

Le terminal de traitement 7 distant transmet au terminal mobile 15 une alerte lorsque le niveau de remplissage d'un récipient à ordures 2 atteint un seuil prédéfini par l'interface de suivi 14. Par exemple, il est possible de fixer un seuil lorsque le taux de remplissage d'un récipient à ordures 2 atteint 75% de sa capacité. Ainsi, chaque opérateur en tournée bénéficiera d'un lapse de temps suffisant pour vider/ramasser les récipients à ordures 2 pour lesquels il a déjà reçu une alerte avant se rendre sur l'emplacement du dernier récipient à ordures 2 pour lequel une nouvelle alerte lui a été transmise.

D'autres seuils peuvent être paramétrés depuis l'interface de suivi 14 pour faciliter le suivi de remplissage d'un récipient à ordures 2. Par exemple, des seuils peuvent être paramétrés à 25 %, 50 %, 100% du taux de remplissage d'un récipient à ordures 2. Les seuils à 25% et 50% peuvent s'afficher sur l'interface de suivi 14 sans être transmis au terminal mobile 15 ou être également transmis au terminal mobile 15.

En outre, le terminal de traitement 7 peut transmettre une alerte au travers d'un réseau de télécommunication sous forme d'un message de type « SMS » et/ou via une application installée sur le terminale mobile 15.

Dans cet exemple, la base de données répertorie chaque boitier de suivi 3 et le récipient à ordures 2 auquel il est associé, leur position par secteur au sein du site, le taux de remplissage du récipient à ordures 2, le niveau restant de la source d'énergie 4 et l'attribution de chaque terminale mobile 15 à un secteur du site.

L'invention porte également sur un procédé de suivi d'un ensemble de récipients à ordures 2 répartis sur un site défini. Le procédé de suivi selon l'invention met en œuvre un système de suivi 1 tel que décrit préalablement.

Le procédé de suivi comprend une étape de mesure du remplissage de chaque récipient à ordures 2 équipé d'un boîtier de suivi 3 autonome. De préférence, l'étape de mesure se déroule lors de la période d'éveil du capteur de remplissage 5 de chaque boitier de suivi 3. Au cours de l'étape de mesure, le capteur de remplissage 5 mesure le taux de remplissage du récipient à ordures 2.

Le procédé de suivi comporte une étape de génération d'un message hertzien MZ. Le message hertzien MZ comprend les données du taux de remplissage du récipient à ordures 2. Le message hertzien MZ peut également comprendre des données relatives au niveau restant de la source d'énergie 4. De préférence, le message hertzien MZ comprend une signature SN d'identification du boîtier de suivi 3. Ici, l'étape de génération du message hertzien MZ est réalisée par le microcontrôleur 9 du boitier de suivi 3.

Le procédé de suivi comprend une étape de transmission du message hertzien MZ. L'étape de transmission du message hertzien MZ se déroule, de préférence, pendant la période d'éveil de l'émetteur 6 et/ou du capteur de remplissage 5 et/ou du microcontrôleur 9 de chaque boitier de suivi 3.

De préférence, les étapes de mesure, de génération d'un message hertzien MZ et de transmission sont successives et quasi simultanées. Cette caractéristique permet de réduire la consommation énergétique du boitier de suivi 3 et de préserver la source d'énergie 4.

Dans cet exemple, l'émetteur 6 transmet simultanément vers le terminal de traitement 7 distant trois types de données. L'émetteur 6 transmet des données de remplissage du récipient à ordures 2. L'émetteur 6 peut également transmettre des données relatives au niveau de la source d'énergie 4. Des données de signature permettant d'identifier le récipient à ordures 2 duquel provient le message hertzien MZ sont également transmises par l'émetteur 6 vers le terminal de traitement 7 distant.

Selon un mode particulier de réalisation de l'invention, les étapes de mesure, de génération d'un message hertzien MZ et de transmission d'un boitier de suivi 3 se succèdent à intervalles réguliers. Chaque intervalle correspondant à un intervalle de sommeil observé par le microcontrôleur 9, le capteur de remplissage 5 et l'émetteur 6 de chaque boitier de suivi 3. La succession des intervalles de sommeil et des périodes d'éveil est gérée par les moyens de gestion 8. Cette succession d'intervalles de sommeil peut être paramétrée lors de l'implantation du boîtier de suivi 3 ou optionnellement à distance depuis l'interface de suivi 14.

De préférence, au sein d'une même flotte 13 de récipients à ordures 2, chaque boîtier de suivi 3 fonctionne de manière désynchronisé par rapport aux autres boîtiers de suivi 3. En particulier, chaque boîtier de suivi réalise les étapes de mesure, de génération d'un message hertzien MZ et de transmission de manière désynchronisée par rapport aux autres boîtiers de suivi 3 d'une même flotte 13. En pratique, les transmissions de messages hertziens MZ de chaque boîtier de suivi 3 sont décalées les uns par rapport aux autres. Avantageusement, cette caractéristique du procédé de suivi 1 permet d'éviter une collision entre deux messages hertziens MZ au niveau de l'unité de relai 12.

Le procédé de suivi comporte une étape de relai des données transmises par chaque émetteur 6. L'étape de relai est réalisée par l'unité relai 12 qui réceptionne chaque message hertzien MZ via son récepteur de radio fréquence. Dans un second temps, l'unité relai transforme le message hertzien MZ en message numérique MN. L'unité relaye transmet le message numérique MN vers le terminal de traitement 7 distant via son module de communication.

Le procédé de suivi comporte une étape de traitement de chaque message numérique MN relayé par l'unité de relai 12 vers le terminal de traitement 7 distant.

L'étape de traitement comporte une opération d'implémentation d'une base de données avec les nouvelles données contenues dans le dernier message numérique MN reçu par le terminal de traitement 7 distant. Lors de l'opération d'implémentation la provenance du message numérique MN est identifiée au travers de la signature SN qu'il comporte. En outre, le message numérique MN permet d'actualiser les données relatives au taux de remplissage et au niveau restant de la source d'énergie 4 du boitier de suivi 3 identifié.

L'étape de traitement comporte une opération d'analyse des données implémentées dans la base de données. Lors de l'opération d'analyse des données implémentées le terminal de traitement 7 distant vérifie que le taux de remplissage du récipient à ordures 2 dont le boîtier de suivi 3 a été identifié n'atteint pas une valeur seuil prédéfinie. Lorsque la valeur seuil prédéfinie du taux de remplissage d'un récipient à ordure 2 est atteinte, le procédé de suivi comporte une étape d'alerte. L'étape d'alerte consiste à alerter un opérateur en tournée sur site que le récipient à ordures 2 correspondant au boitier de suivi 3 identifié a atteint la valeur seuil prédéfinie de remplissage. Ainsi l'opérateur en tournée, pourra se rendre en priorité à l'emplacement du récipient à ordures 2 pour le vider. En pratique, le terminal de traitement 7 distant transmet un message vers le terminal mobile 15 qui est en charge du secteur auquel appartient le récipient à ordures 2 du boîtier de suivi 3 identifié. L'opérateur en possession dudit terminal mobile 15 peut alors se rendre prioritairement à l'emplacement dudit récipient à ordures 2 pour le vider.

L'étape de traitement peut comporter une opération de filtrage des données implémentées pour un boîtier de suivi 3 identifié.

L'opération de filtrage consiste à vérifier si lors de la précédente opération d'implémentation la valeur seuil prédéfinie avait été déjà atteinte. Dans cet exemple, deux implémentations successives de la valeur seuil prédéfinie ou d'une valeur supérieure à la valeur seuil prédéfinie, déclenche l'étape d'alerte.

En outre, lors de l'étape de traitement, le terminal de traitement 7 distant peut également vérifier que le niveau restant de la source d'énergie 4 n'atteint pas une valeur seuil critique. Lorsque le niveau restant de la source d'énergie 4 atteint la valeur seuil critique, le procédé de suivi comporte une étape d'alerte spéciale, de la même manière que pour l'étape d'alerte, le terminal de traitement 7 distant transmet un message d'alerte spéciale indiquant à l'opérateur en charge du secteur que le niveau de la source d'énergie 4 du boîtier de suivi 3 identifié nécessite une intervention, par exemple, un remplacement de la source d'énergie 4.

Une telle alerte spéciale peut également être transmise à l'interface de suivi 14 où elle sera mise en valeur.

L'alerte spéciale permet d'anticiper une interruption intempestive du fonctionnement de chaque boîtier de suivi 3 par épuisement de la source d'énergie 4.

Par ailleurs, le procédé de suivi peut comporter une étape d'alerte sécurité lorsqu'un remplissage anormal d'un récipient à ordures 2 est détecté ou que le capteur de remplissage 5 est bouché. Un remplissage anormal d'un récipient à ordures 2 peut être matérialisé par le passage pour un même récipient à ordures 2, d'un état de remplissage faible à la valeur seuil prédéfinie lors de deux implémentations successives. Dans ce cas de figure, le terminal de traitement 7 distant peut être configuré pour transmettre un message d'alerte au service de sécurité du site en indiquant le récipient à ordures 2 pour lequel un remplissage anormal a été détecté.

L'étape de traitement peut également permettre de détecter l'absence de l'obturateur 2a et/ou lorsqu'il est mobile, un blocage en position ouverte. En effet, lorsque le capteur de remplissage 5 n'est pas orienté vers le fond du récipient à ordures 2, il peut émettre des valeurs erronées qui peuvent tendre à l'infini. Dans ces conditions, le procédé peut comprendre une étape d'alerte de dysfonctionnement qui se matérialise par l'envoi d'un message d'alerte de dysfonctionnement vers l'interface de suivi 14 et/ou le terminal mobile 15.

Par ailleurs selon un autre exemple de réalisation de l'invention, il est possible d'équiper le boîtier de suivi 3 de capteurs supplémentaires tels qu'un capteur de fumée, un capteur de métal, un capteur de mouvement etc. Une combinaison de différents capteurs permet de diversifier les remontées d'informations vers le serveur de traitement 7 distant.

## Revendications

1. Système de suivi (1) de remplissage d'un ensemble de récipients à ordures (2) qui sont répartis sur un site à haute densité de passage, le système de suivi (1) comportant :
- un boîtier de suivi (3) autonome qui équipe chaque récipient à ordures (2), chaque boîtier de suivi (3) autonome comprenant une source d'énergie (4) qui alimente au moins un capteur de remplissage (5) du récipient à ordures (2) et un émetteur (6) adapté à transmettre des données vers un terminal de traitement (7) distant ;
- une unité relai (12) qui est positionnée dans un rayon d'émission de l'émetteur (6) d'un sous-ensemble de récipients à ordures (2), l'unité relai (12) étant adaptée à relayer les données transmises par l'émetteur (6) de chaque boîtier de suivi (3) vers le terminal de traitement (7) distant ;
**caractérisé en ce que**, le système de suivi (1) comporte :
- au moins un terminal mobile (15) adapté à recevoir en temps réel le taux de remplissage de chaque récipient à ordures (2) équipé d'un boîtier de suivi (3) autonome permettant à au moins un opérateur en patrouille sur un site et qui est équipé d'un terminal mobile (15) de recevoir en temps réel des informations quant au taux de remplissage des récipients à ordures (2) du site, et
- une interface de suivi (14) qui permet de suivre l'évolution du remplissage et le vidage de chaque récipient à ordures (2),
le terminal de traitement (7) étant configuré pour transmettre une alerte au terminal mobile (15) lorsque le niveau de remplissage d'un récipient à ordures (2) atteint un seuil prédéfini par l'interface de suivi (14).

2. Système de suivi (1) selon la revendication 1, **caractérisé en ce que** l'émetteur (6) est un émetteur de radiofréquences paramétré pour fonctionner selon un facteur d'étalement de faible valeur qui est compris entre 50 chips/symbol et 200 chips/symbol.

3. Système de suivi (1) selon la revendication 2, **caractérisé en ce que** l'unité relai (12) comporte un récepteur de radiofréquence permettant de recevoir les données transmises par chaque émetteur (6) .

4. Système de suivi (1) selon l'une des revendications 1 à 3, **caractérisé en ce que** l'unité de relai (12) comporte un module de télécommunication adapté à transférer les données transmises par chaque émetteur (6), au travers d'un réseau de télécommunication, à destination du terminal de traitement (7) distant.

5. Système de suivi (1) selon l'une des revendications 1 à 4, **caractérisé en ce que** l'émetteur (6) utilise des ultra-hautes fréquences qui se propagent en vue directe.

6. Système de suivi (1) selon la revendication 5, **caractérisé en ce que** la bande de fréquence de l'émetteur (6) est réglée à 868 Mhz.

7. Système de suivi (1) selon l'une des revendications 1 à 6, **caractérisé en ce que**, chaque boîtier de suivi (3) autonome comporte des moyens de gestion (8) de la source d'énergie (4) qui sont configurés pour éveiller périodiquement le capteur de remplissage (5) et l'émetteur (6) de manière à mesurer le remplissage du récipient à ordures (2) et d'émettre ces données.

8. Système de suivi (1) selon la revendication 7, **caractérisé en ce qu'**il comporte un intervalle de sommeil entre chaque période d'éveil qui est compris entre 2 minutes et 15 minutes, de préférence l'intervalle de sommeil est compris entre 5 et 10 minutes.

9. Système de suivi (1) selon l'une des revendications 1 à 8, **caractérisé en ce que** l'émetteur (6) est un émetteur de courtes distances, de préférence, il permet d'émettre sur une distance comprise entre 50 m et 500 m.

10. Procédé de suivi mettant en œuvre un système de suivi (1) selon l'une des revendications 1 à 9, comportant
- une étape de génération d'un message hertzien MZ qui comprend des données du taux de remplissage d'un récipient à ordures (2) correspondant à un boîtier de suivi (3) et une signature SN d'identification du boîtier de suivi (3) ;
- une étape de transmission du message hertzien MZ par l'émetteur (6) vers une unité relai (12) ;une étape de relai des données transmises par l'émetteur (6), l'unité relai (12) réceptionne chaque message hertzien MZ et le transforme en message numérique MN, avant de le transmettre le message numérique MN vers le terminal de traitement (7) distant via son module de communication ;
- une étape de traitement de chaque message numérique MN par le terminal distant (7), l'étape de traitement consiste à identifier la provenance du message numérique MN au travers de la signature SN qu'il comporte, à implémenter une base de données relative au taux de remplissage du récipient à ordures (2) identifié ; et
- une étape d'alerte est déclenchée lorsque un récipient à ordure (2) atteinte un taux de remplissage seuil prédéfini, l'étape d'alerte consiste à alerter un opérateur en tournée sur site que le récipient à ordures (2) correspondant au boîtier de suivi (3) identifié a atteint la valeur seuil prédéfinie de remplissage.

11. Procédé de suivi selon la revendication 10, **caractérisé en ce que**, chaque boîtier de suivi (3) autonome observe un intervalle de sommeil entre deux périodes d'éveil, lors d'une période d'éveil, le capteur du remplissage (5) et l'émetteur (6) de chaque boîtier de suivi (3) s'activent simultanément de manière à générer et transmettre un message hertzien MZ vers l'unité de relai (12).

12. Procédé de suivi selon l'une des revendications 10 et 11, **caractérisé en ce que** l'étape de traitement comporte une opération de filtrage des données implémentées pour un boîtier de suivi (3) identifié, l'opération de filtrage consiste à vérifier si lors de la précédente opération d'implémentation la valeur seuil prédéfinie avait été déjà atteinte.

13. Procédé de suivi selon la revendication 12, **caractérisé en ce que** deux implémentations successives de la valeur seuil prédéfinie ou d'une valeur supérieure à la valeur seuil prédéfinie, déclenche l'étape d'alerte.

14. Procédé de suivi selon l'une des revendications 10 à 13, **caractérisé en ce que** le terminal de traitement (7) distant vérifie que le niveau restant de la source d'énergie (4) n'atteint pas une valeur seuil critique, lorsque le niveau restant de la source d'énergie (4) atteint la valeur seuil critique, le terminal de traitement (7) distant transmet un message d'alerte spéciale indiquant à l'opérateur en charge du secteur que le niveau de la source d'énergie (4) du boîtier de suivi (3) identifié nécessite une intervention, par exemple, un remplacement de la source d'énergie (4).

15. Procédé de suivi selon l'une des revendications 10 à 14, **caractérisé en ce que** le procédé de suivi comporte une étape d'alerte sécurité lorsqu'un remplissage anormal d'un récipient à ordures (2) est détecté ou que le capteur de remplissage (5) est bouché.

## Patentansprüche

1. Verfolgungssystem (1) der Befüllung eines Satzes von Abfallbehältern (2), die an einem Standort mit einer hohen Durchgangsdichte verteilt sind, wobei das Verfolgungssystem (1) umfasst:
- eine autonome Verfolgungsbox (3), die an jedem Abfallbehälter (2) angebracht ist, wobei jede autonome Verfolgungsbox (3) eine Stromquelle (4), die mindestens einen Füllstandssensor (5) des Abfallbehälters (2) versorgt, und einen Sender (6) umfasst, der ausgelegt ist, um Daten an ein Fern-Verarbeitungs-Endgerät (7) zu übertragen;
- eine Weiterleitungseinheit (12), die innerhalb eines Senderadius des Senders (6) einer Teilmenge von Abfallbehältern (2) positioniert ist, wobei die Weiterleitungseinheit (12) ausgelegt ist, um die vom Sender (6) jeder Verfolgungsbox (3) übertragenen Daten an das Fern-Verarbeitungs-Endgerät (7) weiterzuleiten;
**dadurch gekennzeichnet, dass** das Verfolgungssystem (1) umfasst:
- mindestens ein mobiles Endgerät (15), das ausgelegt ist, um in Echtzeit den Füllstand jedes Abfallbehälters (2) zu empfangen, der mit einer autonomen Verfolgungsbox (3) ausgestattet ist, die es mindestens einem Bediener, der an einem Standort im Wachdienst ist und der mit einem mobilen Endgerät (15) ausgestattet ist, ermöglicht, in Echtzeit Informationen über den Füllstand der Abfallbehälter (2) des Standorts zu erhalten, und
- eine Verfolgungsschnittstelle (14), mit der der Fortschritt der Befüllung und Entleerung jedes Abfallbehälters (2) verfolgt werden kann,
wobei das Verarbeitungs-Endgerät (7) konfiguriert ist, um einen Alarm an das mobile Endgerät (15) zu übertragen, wenn der Füllstand eines Abfallbehälters (2) einen von der Verfolgungsschnittstelle (14) vordefinierten Schwellenwert erreicht.

2. Verfolgungssystem (1) nach Anspruch 1, **dadurch gekennzeichnet, dass** der Sender (6) ein Hochfrequenzsender ist, der parametriert ist, um mit einem niedrigen Spreizfaktor zu arbeiten, der zwischen 50 Chips/Symbol und 200 Chips/Symbol liegt.

3. Verfolgungssystem (1) nach Anspruch 2, **dadurch gekennzeichnet, dass** die Weiterleitungseinheit (12) einen Hochfrequenzempfänger zum Empfangen der von jedem Sender (6) übertragenen Daten umfasst.

4. Verfolgungssystem (1) nach einem der Ansprüche 1 bis 3, **dadurch gekennzeichnet, dass** die Weiterleitungseinheit (12) ein Telekommunikationsmodul umfasst, das so ausgelegt ist, dass es die von jedem Sender (6) übertragenen Daten über ein Telekommunikationsnetzwerk an das entfernte Verarbeitungs-Endgerät (7) überträgt.

5. Verfolgungssystem (1) nach einem der Ansprüche 1 bis 4, **dadurch gekennzeichnet, dass** der Sender (6) ultrahohe Frequenzen verwendet, die sich bei direkter Sicht ausbreiten.

6. Verfolgungssystem (1) nach Anspruch 5, **dadurch gekennzeichnet, dass** das Frequenzband des Senders (6) auf 868 MHz eingestellt ist.

7. Verfolgungssystem (1) nach einem der Ansprüche 1 bis 6, **dadurch gekennzeichnet, dass** jede autonome Verfolgungsbox (3) Mittel (8) zum Verwalten der Stromquelle (4) umfasst, die konfiguriert so sind, dass sie den Füllstandssensor (5) und den Sender (6) periodisch aktivieren, um die Füllung des Abfallbehälters (2) zu messen und diese Daten zu übertragen.

8. Verfolgungssystem (1) nach Anspruch 7, **dadurch gekennzeichnet, dass** es zwischen jeder Aktivierungsperiode ein Ruheintervall umfasst, das zwischen 2 Minuten und 15 Minuten liegt, wobei das Ruheintervall vorzugsweise zwischen 5 und 10 Minuten liegt.

9. Verfolgungssystem (1) nach einem der Ansprüche 1 bis 8, **dadurch gekennzeichnet, dass** der Sender (6) vorzugsweise ein Kurzstreckensender ist, der geeignet ist, um in einer Entfernung zwischen 50 m und 500 m zu übertragen.

10. Verfolgungsverfahren, das ein Verfolgungssystem (1) nach einem der Ansprüche 1 bis 9 implementiert, umfassend:
- einen Schritt des Erzeugens einer Funkmeldung (*message hertzien-* MZ), die Daten des Füllstands eines Abfallbehälters (2), der einer Verfolgungsbox (3) entspricht, und eine identifizierende Signatur (*signature*-SN) der Verfolgungsbox (3) enthält;
- einen Schritt des Übertragens der MZ durch den Sender (6) an eine Weiterleitungseinheit (12); einen Schritt des Weiterleitens der vom Sender (6) übertragenen Daten, wobei die Weiterleitungseinheit (12) jede MZ empfängt und sie in eine digitale Meldung (*message numerique*-MN) umwandelt, bevor sie die MN über ihr Kommunikationsmodul an das Fern-Verarbeitungs-Endgerät (7) überträgt;
- einen Schritt der Verarbeitung jeder MN durch das Fern-Endgerät (7), wobei der Verarbeitungsschritt darin besteht, den Ursprung der MN anhand der SN, die sie umfasst, zu identifizieren, um eine Datenbank bezüglich des Füllstands des identifizierten Abfallbehälters (2) zu implementieren; und
- wobei ein Alarmierungsschritt ausgelöst wird, wenn ein Abfallbehälter (2) einen vordefinierten Schwellenfüllstand erreicht, wobei der Alarmierungsschritt darin besteht, einen Bediener vor Ort zu alarmieren, dass der Abfallbehälter (2), der der identifizierten Verfolgungsbox (3) entspricht, den vordefinierten Schwellenfüllstand erreicht hat.

11. Verfolgungsverfahren nach Anspruch 10, **dadurch gekennzeichnet, dass** jede autonome Verfolgungsbox (3) ein Ruheintervall zwischen zwei Aktivierungsperioden einhält, während einer Aktivierungsperiode der Füllstandssensor (5) und der Sender (6) jeder Verfolgungsbox (3) gleichzeitig aktiviert werden, um eine MZ zu erzeugen und an die Weiterleitungseinheit (12) zu übertragen.

12. Verfolgungsverfahren nach einem der Ansprüche 10 und 11, **dadurch gekennzeichnet, dass** der Verarbeitungsschritt einen Filterungsvorgang der für eine identifizierte Verfolgungsbox (3) implementierten Daten umfasst, wobei der Filterungsvorgang darin besteht, zu prüfen, ob der vordefinierte Schwellenwert während des vorherigen Implementierungsvorgangs bereits erreicht war.

13. Verfolgungsverfahren nach Anspruch 12, **dadurch gekennzeichnet, dass** zwei aufeinanderfolgende Implementierungen des vordefinierten Schwellenwertes oder eines Wertes oberhalb des vordefinierten Schwellenwertes den Alarmierungsschritt auslösen.

14. Verfolgungsverfahren nach einem der Ansprüche 10 bis 13, **dadurch gekennzeichnet, dass** das Fern-Verarbeitungs-Endgerät (7) sicherstellt, dass der verbleibende Pegel der Stromquelle (4) einen kritischen Schwellenwert nicht erreicht, und wenn der verbleibende Pegel der Stromquelle (4) den kritischen Schwellenwert erreicht, das Fern -Verarbeitungs-Endgerät (7) eine spezielle Alarmmeldung sendet, die dem für das Netz zuständigen Bediener anzeigt, dass der Pegel der Stromquelle (4) der identifizierten Verfolgungsbox (3) einen Eingriff, beispielsweise einen Austausch der Stromquelle (4), erfordert.

15. Verfolgungsverfahren nach einem der Ansprüche 10 bis 14, **dadurch gekennzeichnet, dass** das Verfolgungsverfahren einen Sicherheitsalarmierungsschritt umfasst, wenn eine ungewöhnliche Befüllung eines Abfallbehälters (2) erkannt wird oder der Füllstandssensor (5) blockiert ist.

## Claims

1. System (1) for monitoring the filling of a set of waste containers (2) which are distributed over a site with a high density of passers-by, the monitoring system (1) comprising:
- an autonomous monitoring box (3) which is provided on each waste container (2), each autonomous monitoring box (3) including a power source (4) which supplies power to at least one fill sensor (5) of the waste container (2) and to a transmitter (6) suitable for transmitting data to a remote processing terminal (7);
- a relay unit (12) which is positioned within a transmission radius of the transmitter (6) of asub-set of waste containers (2), the relay unit (12) being suitable for relaying, to the remote processing terminal (7), the data transmitted by the transmitter (6) of each monitoring box (3);
**characterized in that** the monitoring system (1) comprises:
- at least one mobile terminal (15) suitable for receiving, in real time, the fill rate of each waste container (2) provided with an autonomous monitoring box (3), allowing at least one operator patrolling a site and provided with a mobile terminal (15) to receive, in real time, information regarding the fill rate of the waste containers (2) on the site, and
- a monitoring interface (14) which allows the progress of filling and emptying of each waste container (2) to be monitored,
the processing terminal (7) being configured to transmit an alert to the mobile terminal (15) when the fill level of a waste container (2) reaches a threshold predefined by the monitoring interface (14).

2. Monitoring system (1) according to claim 1, **characterized in that** the transmitter (6) is a radio frequency transmitter set up to operate according to a low-value spreading factor which is between 50 chips/symbol and 200 chips/symbol.

3. Monitoring system (1) according to claim 2, **characterized in that** the relay unit (12) comprises a radio frequency receiver for receiving the data transmitted by each transmitter (6).

4. Monitoring system (1) according to any of claims 1 to 3, **characterized in that** the relay unit (12) comprises a telecommunications module suitable for transferring, to the remote processing terminal (7) via a telecommunications network, the data transmitted by each transmitter (6).

5. Monitoring system (1) according to any of claims 1 to 4, **characterized in that** the transmitter (6) uses ultra-high frequencies which are propagated in direct view.

6. Monitoring system (1) according to claim 5, **characterized in that** the frequency band of the transmitter (6) is set at 868 Mhz.

7. Monitoring system (1) according to any of claims 1 to 6, **characterized in that** each autonomous monitoring box (3) comprises means (8) for managing the power source (4) which are configured to periodically wake the fill sensor (5) and the transmitter (6) so as to measure the filling of the waste container (2) and to transmit this data.

8. Monitoring system (1) according to claim 7, **characterized in that** it comprises, between each wake period, asleep interval which is between 2 minutes and 15 minutes, the sleep interval preferably being between 5 and 10 minutes.

9. Monitoring system (1) according to any of claims 1 to 8, **characterized in that** the transmitter (6) is a short-range transmitter, preferably for transmitting over a range between 50 m and 500 m.

10. Monitoring method using a monitoring system (1) according to any of claims 1 to 9, comprising:
- a step of generating a wireless message MZ which includes data regarding the fill rate of a waste container (2) corresponding to a monitoring box (3), and an identification signature SN of the monitoring box (3);
- a step of transmitting, by the transmitter (6), the wireless message MZ to a relay unit (12); a step of relaying the data transmitted by the transmitter (6), the relay unit (12) receiving each wireless message MZ and transforming it into adigital message MN, before transmitting the digital message MN to the remote processing terminal (7) via its communication module;
- a step of processing, by the remote terminal (7), each digital message MN, the processing step consisting in identifying the origin of the digital message MN using the signature SN that said message comprises, and in implementing a database relating to the fill rate of the identified waste container (2); and
- an alert step is triggered when a waste container (2) reaches a predefined threshold fill rate, the alert step consisting in alerting an operator on a tour of the site that the waste container (2) corresponding to the identified monitoring box (3) has reached the predefined threshold fill value.

11. Monitoring method according to claim 10, **characterized in that** each autonomous monitoring box (3) observes a sleep interval between two wake periods, the fill sensor (5) and the transmitter (6) of each monitoring box (3) being activated simultaneously during a wake period so as to generate a wireless message MZ and transmit said message to the relay unit (12).

12. Monitoring method according to either claim 10 or claim 11, **characterized in that** the processing step comprises an operation of filtering the data implemented for an identified monitoring box (3), the filtering operation consisting in checking whether the predefined threshold value had already been reached during the previous implementation operation.

13. Monitoring method according to claim 12, **characterized in that** two successive implementations of the predefined threshold value, or of avalue greater than the predefined threshold value, triggers the alert step.

14. Monitoring method according to any of claims 10 to 13, **characterized in that** the remote processing terminal (7) checks that the remaining level of the power source (4) does not reach a critical threshold value, the remote processing terminal (7) transmitting, when the remaining level of the power source (4) reaches the critical threshold value, a special alert message indicating to the operator in charge of the area that the level of the power source (4) of the identified monitoring box (3) requires intervention, for example replacement of the power source (4).

15. Monitoring method according to any of claims 10 to 14, **characterized in that** the monitoring method comprises a security alert step when abnormal filling of awaste container (2) is detected or when the fill sensor (5) is blocked.
